# EUROPEAN PATENT SPECIFICATION

(11) **EP 1 190 554 B1**
(45) Date of publication and mention of the grant of the patent: **23.05.2012**
(21) Application number: 00939876.9
(22) Date of filing: 14.06.2000
(51) Int. Cl.: H04M 1/738, H04M 1/24, H04M 3/30

(54) **INTERFACE CLASS DISCOVERY METHOD AND DEVICE**
VERFAHREN UND VORRICHTUNG ZUR ENTDECKUNG DER KLASSE EINER SCHNITTSTELLE
PROCEDE ET DISPOSITIF PERMETTANT DE DECOUVRIR LA CLASSE D'INTERFACES

(30) Priority: 14.06.1999 US 139112 P
(43) Date of publication of application: 27.03.2002
(73) Proprietor: Intel Corporation, Santa Clara, CA 95052 (US)
(72) Inventor: DE NIES, Steven, G., East Aurora, NY 14052 (US); FRITZINGER, Robert, H., Williamsville, NY 14221 (US); OTT, Joseph, S., Depew, NY 14043 (US); GREIER, Thomas, J., Buffalo, NY 14214 (US)
(74) Representative: Harrison Goddard Foote
(86) International application number: PCT/US2000/016369
(87) International publication number: WO 2000/078014

(56) References cited:
- EP-A- 0 762 693
- WO-A-99/37076
- US-A- 5 333 177
- US-A- 5 649 001
- US-A- 5 715 296
- PATENT ABSTRACTS OF JAPAN vol. 018, no. 342 (E-1570), 28 June 1994 (1994-06-28) -& JP 06 085848 A (MITSUBISHI ELECTRIC CORP), 25 March 1994 (1994-03-25)
- DATABASE COMPENDEX [Online] ENGINEERING INFORMATION, INC., NEW YORK, NY, US; 30 April 1984 (1984-04-30), DWYER ROGER F: "USE OF THE KURTOSIS STATISTIC IN THE FREQUENCY DOMAIN AS AN AID IN DETECTING RANDOM SIGNALS" XP002292068 Database accession no. EIX84090150735 & IEEE J OCEANIC ENG APR 1984, vol. OE-9, no. 2, April 1984 (1984-04), pages 85-92,

## Description

### BACKGROUND OF THE INVENTION

### 1. FIELD OF THE INVENTION

The present invention relates to a device and method of discovering the type of telephone switch being used in a telephone system.

### 2. DESCRIPTION OF THE PRIOR ART

It is known in the prior art to determine the interface class of a telephony network by reading reference material corresponding to a device connected to the network. For example, a model number of a telephone is discovered by looking at the telephone, and then an owner' s manual corresponding to the telephone is referenced. If the owner's manual lists the interface class used by the telephone, one can assume the interface class of the telephone is the interface class for the network. Alternatively, the vendor of the telephone may be contacted and asked to provide the interface class. These current methods of determining the interface class of a communication pathway, such as a telephony network, are time consuming.

Patent Abstracts of Japan, Vol. 018, No. 342, 28 June, 1994 and JP 06085848A disclose a modular connector used for both 10 BASE T and ISDN. A signal discrimination circuit discriminates whether a reception signal is received from 10 BASE T or the ISDN depending on a difference between pin assignment used for respective reception signals. A LAN control section or an ISDN control section is activated based on the result of discrimination.

EP-A-0762693 discloses a terminal unit for distinguishing between two or more different kinds of plugs connected to a general purpose modular jack.

### SUMMARY OF THE INVENTION

An object of the present invention is to provide a method and device for determining the interface class of a communication pathway.

According to a first aspect of this invention there is provided a method as claimed in claim 1 herein.

According to a second aspect of this invention there is provided a discovery device as claimed in claim 7 herein.

According to a third aspect of this invention there is provided a computer program as claimed in claim 8 herein.

Preferred features of the invention are defined by the dependent claims,

### BRIEF DESCRIPTION OF THE DRAWINGS

Figure 1 shows steps of a method according to the present invention;
Figure 2 shows steps of another method according to the present invention;
Figure 3 shows devices according to the present invention; and
Figure 4 shows more detail of conductor selection device shown in Figure 3.

### DESCRIPTION OF THE PREFERRED EMBODIMENT

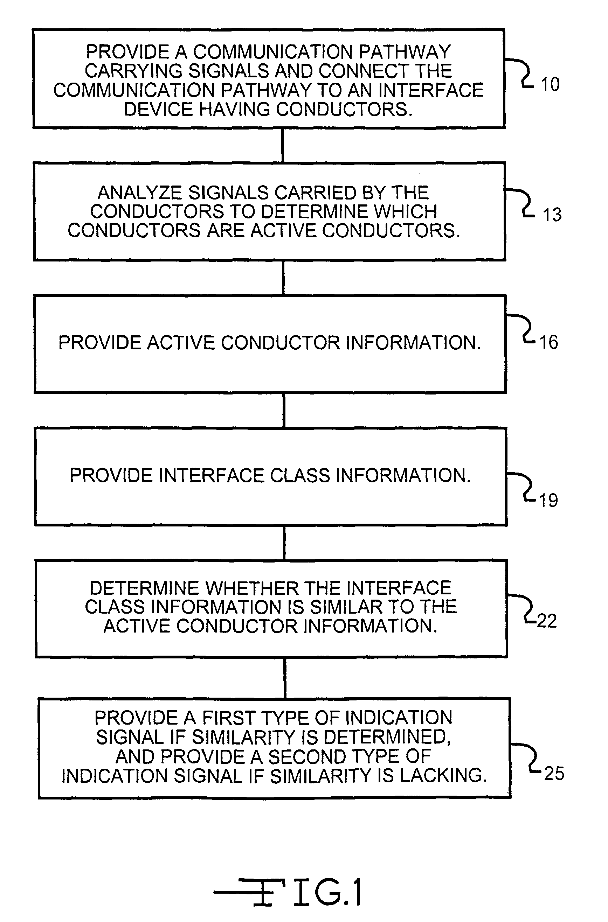

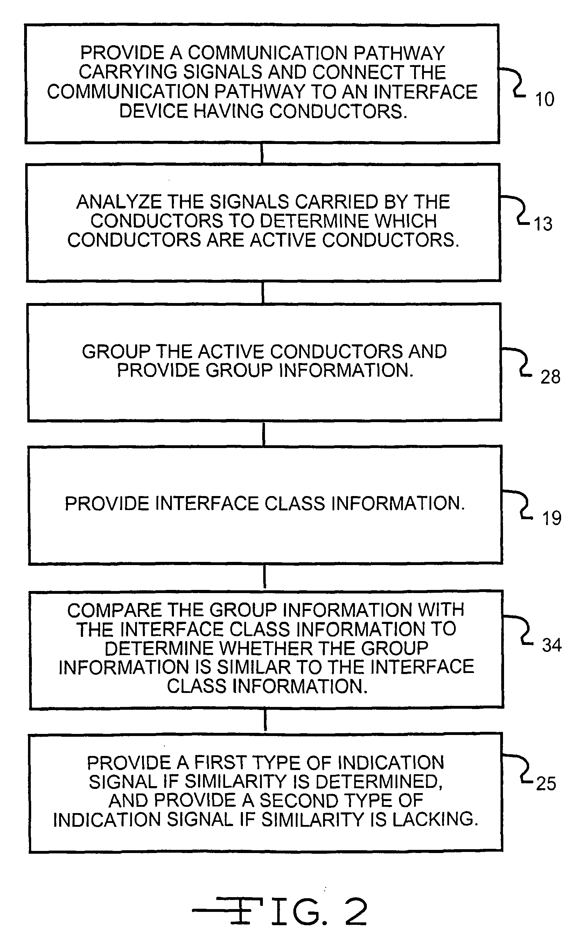

Figures 1 and 2 illustrate a method according to the present invention. The depicted method results in providing an indication signal. In one embodiment of the present invention, the indication signal is a first type if a possible interface class has been discovered, and is a second type if an interface class has been considered and found not to be a possible interface class. In the method, a communication pathway is provided and connected to an interface device having conductors (step 10). The communication pathway carries signals, and the conductors are capable of carrying the signals. In a telephony network, the conductors are commonly referred to as "pins."

Next, the signals carried by the conductors are analyzed to determine which of the conductors are active conductors (step 13), and active conductor information is provided (step 16). For example, the active conductor information may include a list of the active conductors. In a preferred embodiment of the method, the signals analyzed are restricted, for example by using an attenuator, to a desired voltage range. In one embodiment of the invention, the voltage range is restricted to between +5 volts and -5 volts.

In the method, interface class information is provided (step 19) and compared to the list of active conductor information. The interface class information preferably includes information about the active conductors for a known interface class. Then, a determination is made as to whether the interface class information is similar to the active conductor information (step 22). If the interface class information is determined to be similar to the active conductor information, then the first type of indication signal is provided (step 25). Alternatively, if the interface class information is determined not to be similar to the active conductor information, then the second type of indication signal is provided (step 25).

Analyzing the conductors to determine which of the conductors are active conductors (step 13) preferably includes selecting a conductor and analyzing the signal carried by the selected conductor to determine whether a voltage of the signal alternates. If the voltage of the signal carried by the selected conductor alternates, then the selected conductor may be considered a possible active conductor. Further analysis of the signal carried by a possible active conductor may be required to confirm a possible active conductor is in fact an active conductor.

The information about the active conductors for a known interface class may be considered to be similar to the active conductor information (step 22) if the information about the active conductors for the known interface class is among the active conductor information. For example, if it is determined conductors 1 through 6 are active, and a first interface class uses conductors 1 through 4 while a second interface class uses conductors 3 through 6, then both the first and second interface classes might be considered possible interface classes. In the example, further analysis of the signals carried by conductors 1 through 6 would be necessary to determine which interface class is the interface class used on the communication pathway. However, if a third interface class used conductor 7 or conductor 8, then the third interface class could be excluded from the possible interface classes that could be in use on the communication pathway.

It may be beneficial to determine which conductors are active conductors (step 13) by excluding inactive conductors from consideration. To do so, a preferred embodiment of the present invention determines which conductors carry a signal having an alternating voltage, and then determines an average amplitude voltage value for each of those conductors. Next, a reference amplitude voltage is determined, and a determination is made as to which of those conductors carrying an alternating voltage have an average amplitude voltage value less than the reference amplitude voltage. The reference amplitude voltage value may be determined by selecting the highest average amplitude voltage value of all conductors, and setting the reference amplitude voltage to some fraction of the highest average amplitude voltage value. For example, the fraction may be one-half.

In this embodiment of the method, determining the average amplitude voltage value for one of the conductors carrying a signal having an alternating voltage may include measuring the voltage amplitude of the signal carried by one of the conductors during a first period of time and during a second period of time. Then the maximum measured voltage amplitude during the first period of time is selected, and the maximum measured voltage amplitude during the second period of time is selected. The average of the selected maximum measured voltage amplitudes is determined to be the average amplitude voltage value.

Measuring the voltage amplitudes during the first and second periods of time is preferably done at a plurality of discrete times during each time period. The plurality of measurements corresponding to the plurality of discrete times during a time period can be considered an array of measurements for the time period.

If further analysis is required to determine the interface class corresponding to signals carried by the communication pathway, the conductors may be analyzed to determine which conductors are related to each other (step 28). Interface classes can be distinguished from each other by considering which conductors are grouped together. Customarily, two conductors will together provide a signal carried on a telephony network. From time to time herein the signal provided by more than one conductor is referred to as a "group signal." For example, one interface class might group conductors 1 and 2, and might also group conductors 3 and 6. A second interface class might group conductors 1 and 4 and might also group conductors 3 and 6. By determining which conductors corresponding to a communication pathway are grouped, it would be possible to determine whether the first or the second interface class was being used on the communication pathway.

Figure 2 shows a method according to the present invention, wherein the grouping (sometimes referred to as "pairing") of conductors (step 28) may be determined by analyzing the signals carried by the conductors to determine which of the conductors are active conductors, and then grouping the active conductors into groups of active conductors. For example, in a telephony system, known interface classes pair the conductors, and so the groups of active conductors will each have two active conductors.

Then, primary interface class information, including information about the pairing of conductors for a known interface class, is provided (step 19) and compared (step 34) to the information about the groups of active conductors. If the pairing of conductors for the known interface class is similar to the group information, then a first type of a first indication signal is provided to indicate the known interface class is similar to the interface class used on the communication pathway. Alternatively, if the pairing of conductors for the known interface class is not similar to the group information, then a second type of the first indication signal is provided to indicate the known interface class is not similar to the interface class used on the communication pathway.

Grouping the active conductors (step 28) may be done by determining possible pairs of active conductors, and determining an auto correlation value corresponding to each possible pair of active conductors (the "pair auto correlation value"). As used herein, the term "auto correlation" refers to manipulation of data primarily corresponding to a single conductor. A threshold value is set and compared to the pair auto correlation value. Those possible pairs of active conductors having a pair auto correlation value below the threshold value are eliminated from further consideration.

The pair auto correlation value corresponding to a possible pair of active conductors may be determined by measuring a voltage amplitude of the signal carried by a first one of the active conductors at a plurality of discrete times during a first time period to provide a first array of voltage amplitudes. Next, each of the voltage amplitudes in the first array is squared. Then the squared voltage amplitudes are added together to provide a first sum of squares value. A second sum of squares value is determined for the first active conductor corresponding to a second time period in a manner similar to that used to provide the first sum of squares value. Next, third and fourth sum of squares values are determined for the second conductor corresponding to the first and second time periods in a manner similar to that used for the first and second sum of squares values respectively.

Then, a first auto correlation value is determined by adding the first sum of squares value to the second sum of squares value. Similarly, a second auto correlation value is determined by adding the third sum of squares value to the fourth sum of squares value. The auto correlation value corresponding to the possible pair of active conductors is the average of the first auto correlation value and the second auto correlation value.

After determining a pair auto correlation value for each possible pair of active conductors, the threshold value may be set equal to a multiple of the lowest pair auto correlation value. For example, the threshold value may be set at four times the lowest pair auto correlation value.

Another method for grouping the active conductors, that may be used in lieu of or in addition to that described above, utilizes a cross correlation value. As used herein, the term "cross correlation" refers to manipulation of data primarily corresponding to at least two conductors. In this method, a first active conductor and a second active conductor are selected to provide a possible pair of active conductors for analysis. A cross correlation value corresponding to the possible pair of active conductors (the "pair cross correlation value") is determined and compared to a threshold value. If the cross correlation value is less than the threshold value, the possible pair of active conductors is eliminated from further consideration.

In this method, a preferred threshold value is set equal to a fraction, for example one-half, of an auto correlation value corresponding to the possible pair of active conductors. The auto correlation value may be determined as described above.

The cross correlation value corresponding to a possible pair of active conductors may be determined by using the arrays of measurements used to determine the pair auto correlation values. Each measured voltage amplitude for one of the active conductors is multiplied by the corresponding measured voltage amplitude of the other conductor. It should be noted that measured voltage amplitudes multiplied together to arrive at the cross correlation value preferably are taken at about the same discrete time, i.e. "corresponding" measured voltage amplitudes referenced in the immediately prior sentence are those measured voltage amplitudes taken at the same discrete time. The multiplied measured voltage amplitudes are summed together to provide the cross correlation value corresponding to the possible pair of conductors.

After determining the groups of active conductors and comparing the groups to information corresponding to a known interface class, a determination is made as to whether the information corresponding to the known interface class is similar to the groups of active conductors (step 22). A preferred criteria for making this determination is to deem an interface class similar if each pair of conductors in the interface class is the same as a pair of conductors in a group.

For example, it may be determined the groups of active conductors on the communication pathway include a group comprised of conductors 1 and 3. If a first interface class pairs conductors 1 and 3 while a second interface class pairs conductors 1 and 4, then the first interface class is a candidate for being the interface class used on the communication pathway, but the second interface class is not.

After grouping the active conductors, and comparing the groups to known interface classes, more than one known interface class may be a candidate for the interface class used on the communication pathway. One method for determining which known interface class is the interface class used, involves analyzing the signals carried by the groups of conductors.

Interface classes of different encoding schemes may have different fourth moments. So, comparing the fourth moment of a known interface class to the fourth moment of a signal carried by the communication pathway can assist in determining which interface class corresponds to the signals carried by the communication pathway.

For example, the fourth moment of the group signal may be compared to information about the fourth moment of a signal carried by a corresponding pair of conductors of a known interface class. If the comparison results in a determination that the fourth moments are similar, then the interface class is selected as a possible interface class. Similarly, if the comparison results in a determination that the fourth moments are not similar, then the interface class is eliminated as a possible interface class. Preferably, similarity between the fourth moments is present if the fourth moment of the signal corresponding to the known interface class is within about 35% of the fourth moment of the group signal. If similarity between fourth moments is found, a first type of indication signal is provided, and if similarity between fourth moments is not found, a second type of indication signal is provided.

The fourth moment measures the relative peakedness or flatness of a distribution. The fourth moment for an array of voltage amplitudes is determined by determining the average voltage amplitude and the standard deviation of the voltage amplitudes. Next, the difference between each voltage amplitude measurement and the average amplitude is determined and divided by the standard deviation to produce a dividend corresponding to each measured voltage amplitude. Each dividend is then raised to the fourth power (hence the term "fourth moment") to provide a result corresponding to each measured voltage amplitude. The average of the results is the "fourth moment" referred to herein.

After comparing the groups of active conductors to information about all known interface classes, as described above, more than one known interface class may be similar, and further analysis may be needed to determine which known interface class is the most probable interface class being used on the communication pathway. One method of determining which known interface class is the most probable interface class is to analyze the spectral density corresponding to the signals sent via the communication pathway, and compare that spectral density to the spectral density of known interface classes. If the spectral densities are similar, then a first type of indication signal is provided, and if the spectral densities are not similar, then a second type of indication signal is provided.

It is known that the spectral density is dependent on the bit rate and encoding scheme used. Therefore, analyzing and comparing spectral densities may enable one to differentiate between possible interface classes used on the communication pathway.

One means of analyzing the spectral density is to use fast fourier transforms. A fast fourier transform is determined for each group signal (the "group FFT"), and information corresponding to each determined fast fourier transform (the "group FFT information") is compared to fast fourier transform information corresponding to signals carried by pairs of conductors for known interface classes (the "IC FFT information"). The group FFT information and the IC FFT information may be comprised of data points generated by the respective fast fourier transforms wherein frequency is the independent variable and voltage amplitude is the dependent variable. For example, these data points may be the product of the real and imaginary components of the fast fourier transform.

In one method, the group FFT information is normalized so the maximum data point of the group FFT information for one of the time periods is the same as the maximum data point of the IC FFT information. Then, a comparison is made between the normalized group FFT information and the IC FFT information to determine the similarity between the two sets of FFT information. The interface class resulting in the greatest similarity is selected as the most probable interface class being used on the communication pathway.

As an example, the similarity may be determined by subtracting the data points corresponding to the group FFT information from the corresponding data points for the IC FFT information to provide differential data points. In this context, the word "corresponding" in the immediately preceding sentence may refer, for example, to data points related to the same frequency. Then each of the resulting differential data points is squared and the sum of the squared data points is provided. The sum of the squared data points is referred to herein as the "squared error." The interface class corresponding to the lowest of the squared errors exhibits the greatest similarity, and is selected as the most probable interface class being used by the communication pathway.

It has been found that a preferred method of determining the similarity includes determining a normalized set of data points corresponding to the group FFT information, and a corresponding set of data points corresponding to the IC FFT information. Both data sets are smoothed, for example with a Savitzky-Golay filter, and then normalized. The squared error is determined from the smoothed and normalized information.

A Savitzky-Golay filter can be considered a weighted moving average. It replaces each data point, fᵢ with a linear combination gᵢ of itself and some number of nearby neighbors according to the following equation:

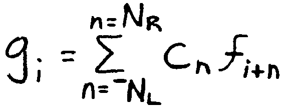

In the equation, N_{L} is the number of data points used to the left of the filtered data point and N_{R} is the number to the right, or in the example given above, the number of data points used that are lesser in frequency and greater in frequency, respectively. Savitzky-Golay is a method of computing the coefficients, Cₙ. Chapter 14 of *Numerical Recipes In C,* second edition, written by William Press, Saul Teukolsky, William Vetterling and Brian Flannery, published by the Press Syndicate of the University of Cambridge in 1992, has more information about the Savitzky-Golay method. *Numerical Recipes In C*, is hereby incorporated by this reference.

The smoothing filter coefficients are computed via the Savitzky-Golay method, as described in Numerical Recipes in C. The coefficients are then used to smooth the data sets corresponding to the group FFT information and the IC FFT information. In one embodiment of the present invention, N_{L} and N_{R} were both equal to 128 and an order of 3 was used. The Savitzky-Golay method is preferably also applied to the interface class FFT information. Since the Savitzky-Golay method can widen main lobes and fill in nulls, the choice of coefficients used to smooth the data sets is preferably made to preserve the main lobe and the first null.

It should be noted at this point that the fourth moment of some interface classes is a function of the loop length. The measured fourth moment can be used to generate an estimate of the loop length. The loop length estimate can then be used to enhance the process of comparing spectral density taking the effects of loop length into consideration when determining the group FFT information.

The similarity between group signals and interface classes can be determined by comparing bit rate and encoding scheme information. The spectral density described above is one method of using these characteristics. Another method of determining bit rates uses a phase-lock-loop circuit ("PLL"). The PLL is applied against the incoming bit stream and indicates a lock when it identifies the bit rate. To do so, the PLL may need a broad dynamic range in order to meet the wide range of bit rates characteristic of communication pathways, such as those communication pathways supporting telephony switches.

Yet another method of determining the bit rate involves detecting zero crossings of the incoming bit stream. It should be noted the alternating signals that are characteristic of the communication pathway cross a zero (average) voltage level as they alternate between maximum and minimum voltage values. Zero (average) crossing timing is an indicator of the bit rate, as well as the bit rate precision that is characteristic of a particular interface class.

When the corresponding measured voltage amplitudes are taken at the same discrete time, the resulting correlation value (auto correlation or cross correlation) is referred to herein as a "zero lag correlation value." It should be noted that corresponding measured voltage amplitudes need not be taken at the same time. In some situations it may be beneficial to have corresponding measured voltage amplitudes that are taken at different times. For example, a time lag of 125 micro seconds, 250 micro seconds or 500 micro seconds has been found useful in determining which known interface class is used on a communication pathway. When the corresponding measured voltage amplitudes are taken at different times, the resulting correlation value is referred to by the time lag, for example a "125 micro second lag correlation value." The value in applying a lag to the correlation is to determine whether a signal exhibits any periodicity. Periodicity is another factor that may be used to distinguish an interface class. Some interface classes divide the signal into frame periods for conveying information, and may hence exhibit a periodic signal that can be determined through the use of a non-zero lag correlation.

Throughout the disclosure so far, various measurements have been described. It should be noted additional measurements may be made to provide more representative information. For example, it was stated the voltage amplitude of a signal is measured during a first time period and during a second time period. As is well known, two measurements often give less representative information than would, for example, ten measurements. The number of time periods and the number of discrete times within a time period should be selected to suit the particular situation. For example, in most telephony networks, sampling the voltage amplitude of a signal during ten time periods of 800 microseconds each, at a rate of 10 mega hertz, will produce sufficiently representative arrays.

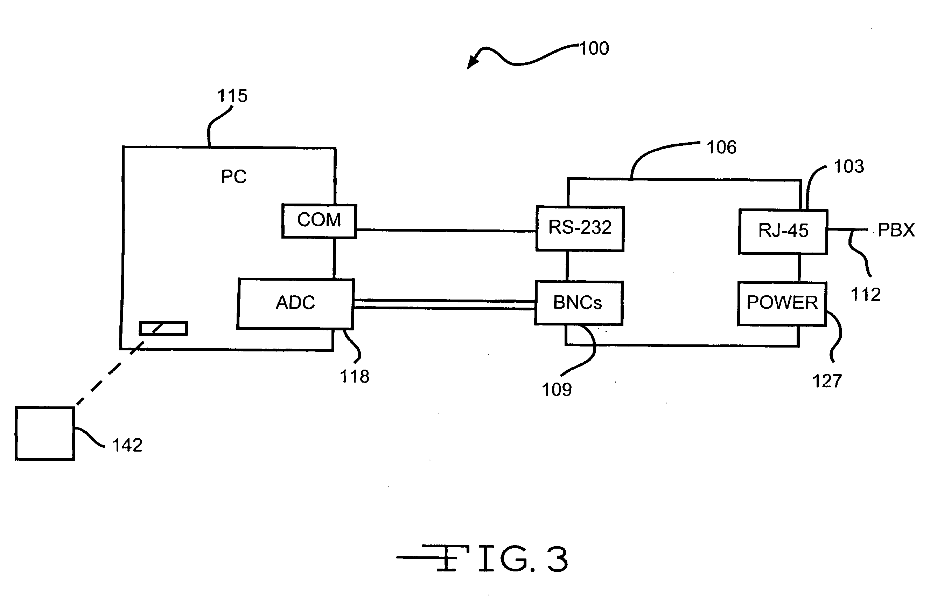

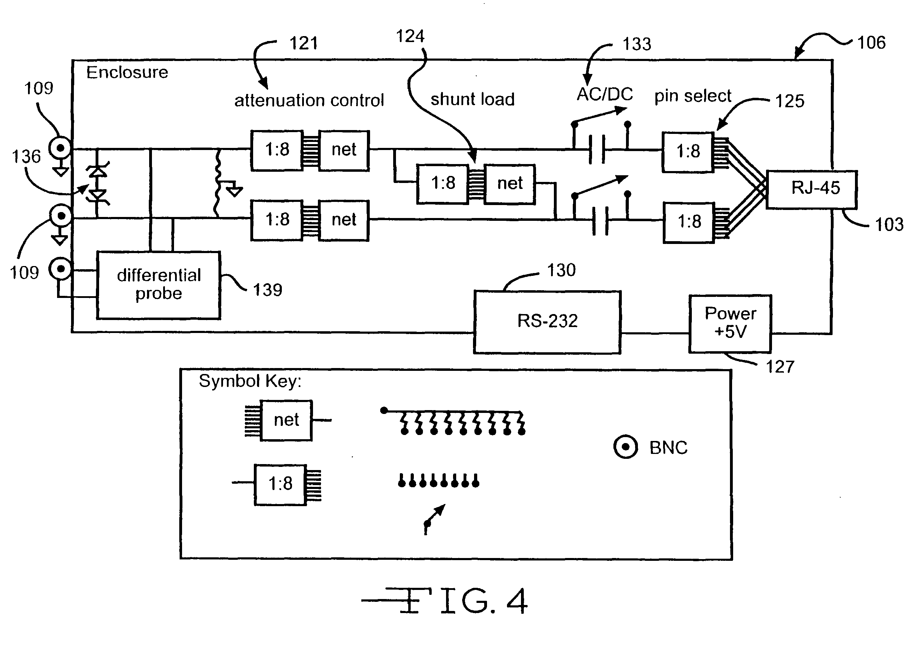

A device 100 for carrying out the methods described above is shown in Figures 3 and 4. The device 100 includes a first connector 103 having a first set of conductors, a conductor selection device 106 and a second connector 109, which may include British Naval Connectors ("BNCs"). The first connector 103 is capable of connecting to a communication pathway 112 and carrying signals from the communication pathway 112 via the conductors. For example, the first connector 103 may be an RJ-45 jack. The conductor selection device 106 is connected to the first connector 103 and the second connector 109. Preferably, the conductor selection device is capable of selecting between the conductors, and connecting some of the conductors to the second connector 109.

A computer 115 is connected to the second connector 109 and has software running thereon. An analog-digital converter 118 may be necessary for the computer 115 to interface with the second connector 109. In an embodiment of the present invention, the analog-digital converter 118 provides two channels of data acquisition with a maximum sampling rate of 10 million samples per second at 12 bit precision. A device driver for the computer 115 is advisable to provide a high level interface between the computer and the analog-digital converter 118.

The software is capable of instructing the computer 115 to determine which of the conductors are active. The software is also capable of instructing the computer 115 to compare the determined active conductors to information corresponding to a known interface (step 22), and then to instruct the computer to send a signal indicating whether the known interface is similar to the determined active conductors (step 25).

In a preferred embodiment of the device 100, the software is further capable of comparing a list of the active conductors to an interface class list, the interface class list identifying conductors used in transmitting signals according to the interface class, and if the list of the active conductors is similar to the interface class list, then instructing the computer 115 to send a signal identifying the interface class.

The software is preferably capable of instructing the computer 115 to determine which conductors are carrying signals representing differentially driven data corresponding to the same signal, and capable of instructing the computer 115 to group the conductors into conductor groups, wherein each conductor group represents conductors carrying differentially driven data corresponding to the same signal.

In addition, the software is further capable of instructing the computer 115 to determines whether the conductors in each conductor group are similar to sets of conductors used in transmitting signals according to an interface class. If the conductors in each group are similar to the sets of conductors, the software instructs the computer 115 to send a signal identifying the interface class. In addition, the software is further capable of controlling and monitoring the operation of relay matrixes 121, 124, 125 within the conductor selection device 106.

The device according to the present invention may include an attenuator 121 connected between the first and second connectors 103,109 for attenuating a signal carried between the first and second connectors 103, 109. The attenuator 121 is used to attenuste a signal from the communication pathway 112 so that the signal is within a range acceptable by other devices. The attenuator 121 may be a matrix of 8 double pole, single throw switches ("DPST") which can select a series resistance when used in conjunction with a 10 kilo ohm attenuation bypass resistor. Selection of an appropriate series resistance will form a simple voltage divider used to provide signal attenuation to extend the dynamic range of an analog-digital converter 118.

A shunt load device 124 may also be included to minimize a reflected signal by matching the interface class balanced impedance. As an example, a matrix of eight single pole, single throw ("SPST") switches can select a shunt load between two selected conductors. The shunt load device may provide seven discrete resistances plus a bypass. For example, the resistances may be 33 ohms, 51 ohms, 82 ohms, 120 ohms, 270 ohms, 470 ohms and 1,000 ohms.

A pin selection device 125 may also be included to select two individual conductors of the eight conductors of connector 103 for signal analysis. The pin selection device 125 may be a matrix of sixteen SPST switches.

The conductor selection device 106 may further include a power supply 127 for supplying power to the conductor selection device 106. An RS-232 interface module 130 may be supplied to control and monitor operation of a relay matrix board. A preferred relay matrix board has 64 DPST normally open, dry contact reed relays and provides all switching interfaces for the conductor selection device.

An AC/DC coupling device 133 having two 20 micro Farad capacitors is preferably included to protect the conductor selection device 106 from excessive currents. A further protection circuit may also be included to shunt stored current in the capacitors before switching between conductors.

Four Zener diodes 136 may be provided to protect the input stage of the analog-digital converter 118. In one embodiment of the present invention, the Zener diodes 136 preferably provide a 10 volt shunt to ground across selected conductors.

Finally, a differential probe 139 may be provided. The differential probe 139 provides high common mode rejection ratio for signal analysis once pairs of conductors have been determined.

The present invention also includes a computer readable storage medium 142. The storage medium 142 may be, for example, a computer disk such as a compact disk or floppy disk, read-only-memory or random-access memory. The storage medium 142 has encoded thereon computer readable instructions capable of instructing a computer to carry out the method described above. In particular, the encoded instructions are capable of instructing a computer to analyze signals carried by conductors connected to a communication pathway to determine which of the conductors are active conductors. The instructions are also capable of instructing the computer 115 to compare the active conductors to interface class information, and then determine whether the interface class information is similar to the active conductors. Finally, the instructions are capable of instructing the computer 115 to provide a first indication signal, the first indication signal being a first type if the interface class information is similar to the active conductor information, and the first indication signal being a second type if the interface class information is not similar to the active conductor information.

A preferred storage medium 142 also has computer readable instructions encoded thereon that are capable of instructing the computer 115 to analyze signals carried by conductors connected to a communication pathway, to determine which of the conductors are active conductors, and then group the active conductors into groups of active conductors, each group of active conductors having a pair of active conductors. The encoded instructions are also capable of instructing the computer 115 to compare group information to interface class information, wherein the group information includes information about the active conductors in each group, and the interface class information includes information about the pairing of conductors for a known interface class. Finally, the encoded instructions are capable of instructing the computer 115 to determine whether the interface class information is similar to the group information, and provide an indication signal indicating whether the interface class information is similar to the group information.

Although preferred embodiments of the present invention have been described and illustrated herein, the present invention is not limited to such preferred embodiments. Since various changes could be made without departing from the scope of the invention, it is intended that the foregoing descriptions shall be interpreted as illustrative, and not interpreted in a limiting sense. Furthermore, it is intended that the present invention shall be limited only by the following claims.

## Claims

1. A method of providing an indication signal, comprising:
providing (10) a communication pathway carrying signals;
connecting (10) the communication pathway to an interface device, the interface device having conductors for carrying the signals;
analyzing (13) the signals carried by the conductors to determine which of the conductors are active conductors comprising determining which conductors carry a signal having an alternating voltage; and determining an average amplitude voltage for each of the conductors carrying a signal having an alternating voltage;
providing (16) active conductor information, wherein the active conductor information includes a list of the active conductors;
providing (19) primary interface class information, wherein the primary interface class information includes information about the active conductors for a known interface class;
determining (22) whether the primary interface class information corresponds to the active conductor information; wherein said determining comprises:
grouping (28) the active conductors into groups of active conductors, each group of active conductors having a pair of active conductors, wherein grouping the active conductors into groups includes:
selecting a first active conductor and a second active conductor to provide a possible pair of active conductors;
determining a cross correlation value corresponding to the possible pair of active conductors;
setting a threshold value, wherein the threshold value is equal to a fraction of an auto correlation value corresponding to the possible pair of active conductors; and
eliminating the possible pair of active conductors if the cross correlation value is less than the threshold value; and
providing group information, wherein the group information includes information about the active conductors in each group; and
providing (25) a first indication signal, the first indication signal being a first type if the information about the active conductors for the interface class corresponds to the active conductor information, and the first indication signal being a second type if the information about the active conductors for the interface class does not correspond to the active conductor information.

2. The method of claim 1, wherein analyzing (13) the signals carried by the conductors further comprises determining a reference amplitude voltage.

3. The method of claim 2, wherein analyzing (13) the signals carried by the conductors further comprises determining inactive conductors, wherein the inactive conductors are those conductors corresponding to determined average amplitude voltage values that are less than the reference amplitude voltage.

4. The method of claim 1, wherein determining the average amplitude voltage value for one of the conductors carrying a signal having an alternating voltage includes:
measuring the voltage amplitude of the signal carried by the one of the conductors at a plurality of discrete times during a first time period to provide a first array of voltage amplitudes;
measuring the voltage amplitude of the signal carried by the one of the active conductors at a plurality of discrete times during a second time period to provide a second array of voltage amplitude values;
selecting the maximum voltage amplitude from each array; and
determining the average of the maximum voltage amplitude to provide the average voltage amplitude value.

5. The method of claim 1, wherein the auto correlation value corresponding to the possible pair of active conductors is determined by:
measuring a voltage amplitude of the signal carried by the first active conductor at a plurality of discrete times during a first time period to provide a first array of voltage amplitudes;
squaring each measured amplitude in the first array and adding the squared measured amplitudes together to provide a first sum of squares value;
measuring a voltage amplitude of the signal carried by the first active conductor at a plurality of discrete times during a second time period to provide a second array of voltage amplitudes;
squaring each measured amplitude in the second array and adding the squared measured amplitudes together to provide a second sum of squares value;
determining a first auto correlation value by adding the first sum of squares value to the second sum of squares value;
measuring a voltage amplitude of the signal carried by the second active conductor at the plurality of discrete times during the first time period to provide a third array of voltage amplitudes;
squaring each measured amplitude in the third array and adding the squared measured amplitudes together to provide a third sum of squares value;
measuring a voltage amplitude of the signal carried by the second active conductor at the plurality of discrete times during the second time period to provide a fourth array of voltage amplitude values;
squaring each measured amplitude in the fourth array and adding the squared measured amplitudes together to provide a fourth sum of squares value;
determining a second auto correlation value by adding the third sum of squares value to the fourth sum of squares value; and
determining the auto correlation value corresponding to the one of the possible pairs of active conductors by determining the average of the first auto correlation value and the second auto correlation value.

6. The method of claim 1, wherein the auto correlation value corresponding to the possible pair of active conductors accounts for periodicity in signals carried by the possible pair of active conductors.

7. The method of claim 6, wherein the auto correlation value corresponding to the possible pair of active conductors is determined by:
measuring a voltage amplitude of the signal carried by the first active conductor at a plurality of discrete times during a first time period to provide a first array of voltage amplitudes;
squaring each measured amplitude in the first array and adding the squared measured amplitudes together to provide a first sum of squares value;
measuring a voltage amplitude of the signal carried by the first active conductor at a plurality of discrete times during a second time period to provide a second array of voltage amplitudes;
squaring each measured amplitude in the second array and adding the squared measured amplitudes together to provide a second sum of squares value;
determining a first auto correlation value by adding the first sum of squares value to the second sum of squares value;
measuring a voltage amplitude of the signal carried by the second active conductor at a plurality of discrete times during a third time period, different from the first time period, to provide a third array of voltage amplitudes;
squaring each measured amplitude in the third array and adding the squared measured amplitudes together to provide a third sum of squares value;
measuring a voltage amplitude of the signal carried by the second active conductor at a plurality of discrete times during a fourth time period, different from the second time period, to provide a fourth array of voltage amplitude values;
squaring each measured amplitude in the fourth array and adding the squared measured amplitudes together to provide a fourth sum of squares value;
determining a second auto correlation value by adding the third sum of squares value to the fourth sum of squares value; and
determining the auto correlation value corresponding to the one of the possible pairs of active conductors by determining the average of the first auto correlation value and the second auto correlation value.

8. The method of claim 1, wherein determining the cross correlation value includes:
measuring a voltage amplitude of the signal carried by the first active conductor at a plurality of discrete times during a first time period to provide a first array of voltage amplitudes;
measuring a voltage amplitude of the signal carried by the first active conductor at a plurality of discrete times during a second time period to provide a second array of voltage amplitudes;
measuring a voltage amplitude of the signal carried by the second active conductor at the plurality of discrete times during the first time period to provide a third array of voltage values;
measuring a voltage amplitude of the signal carried by the second active conductor at the plurality of discrete times during the second time period to provide a fourth array of voltage values; and
multiplying voltage values in the first array with corresponding voltage values in the third array, and multiplying voltage values in the second array with corresponding voltage values in the fourth array, and adding the products together to provide the cross correlation value.

9. The method of claim 1, wherein determining the cross correlation value accounts for periodicity in signals carried by the possible pair of active conductors.

10. The method of claim 9, wherein determining the cross correlation value includes:
measuring a voltage amplitude of the signal carried by the first active conductor at a plurality of discrete times during a first time period to provide a first array of voltage amplitudes;
measuring a voltage amplitude of the signal carried by the first active conductor at a plurality of discrete times during a second time period to provide a second array of voltage amplitudes;
measuring a voltage amplitude of the signal carried by the second active conductor at a plurality of discrete times during a third time period, different from the first time period, to provide a third array of voltage values;
measuring a voltage amplitude of the signal carried by the second active conductor at a plurality of discrete times during a fourth time period, different from the second time period, to provide a fourth array of voltage values; and
multiplying voltage values in the first array with corresponding voltage values in the third array, and multiplying voltage values in the second array with corresponding voltage values in the fourth array, and adding the products together to provide the cross correlation value.

11. A computer program product comprising computer program code means adapted to perform all the steps of any of claims 1-10 when that program code means is run on a computer.

12. A computer program product as claimed in claim 11, when embodied on a computer readable medium.

13. A discovery device (100), comprising:
a switch interface device having a first connector (103) including a first set of conductors, a conductor selection device (106) and a second connector (109), the first connector being capable of connecting to a communication pathway (112) and carrying signals from the communication pathway via the conductors, and the conductor selection device being connected to the first connector and the second connector; and
a computer (115) connected to the second connector (109) and having software running thereon, **characterized in that** the software is arranged to instruct the computer to determine (13) which of the conductors are active or inactive, the active conductors being those that carry the signals, the inactive conductors being determined by finding an average amplitude voltage for each of the conductors carrying a signal having an alternating voltage and comparing the average amplitude voltage to a reference amplitude voltage;
wherein the software is further arranged to instruct the computer to compare (22) a list of the active conductors to an interface class list, the interface class list identifying conductors used in transmitting signals according to the interface class, and if the list of the active conductors is similar to the interface class list, then instructing the computer to send (25) a signal identifying the interface class;
**characterized in that** said comparing comprises:
grouping (28) the active conductors into groups of active conductors, each group of active conductors having a pair of active conductors, wherein grouping the active conductors into groups includes:
selecting a first active conductor and a second active conductor to provide a possible pair of active conductors;
determining a cross correlation value corresponding to the possible pair of active conductors;
setting a threshold value, wherein the threshold value is equal to a fraction of an auto correlation value corresponding to the possible pair of active conductors; and
eliminating the possible pair of active conductors if the cross correlation value is less than the threshold value; and
providing group information, wherein the group information includes information about the active conductors in each group.

## Patentansprüche

1. Verfahren zum Bereitstellen eines Indikationssignals, wobei das Verfahren folgendes umfasst:
das Bereitstellen (10) eines Kommunikationspfads, der Signale führt;
das Verbinden(10) des Kommunikationspfads mit einer Schnittstellenvorrichtung, wobei die Schnittstellenvorrichtung Leiter zum Führen der Signale aufweist;
das Analysieren (13) der von den Leitern geführten Signale, um zu bestimmen, bei welchen der Leiter es sich um aktive Leiter handelt, einschließlich der Bestimmung, welche Leiter ein Signal mit einer Wechselspannung führen; und der Bestimmung einer Durchschnittsamplitudenspannung für jeden der Leiter, der ein Signal mit einer Wechselspannung führt;
das Bereitstellen (16) aktiver Leiterinformationen, wobei die aktiven Leiterinformationen eine Liste der aktiven Leiter aufweisen;
das Bereitstellen (19) primärer Schnittstellenklasseninformationen, wobei die primären Schnittstellenklasseninformationen Informationen über die aktiven Leiter für eine bekannte Schnittstellenklasse aufweisen;
das Bestimmen (22), ob die primären Schnittstellenklasseninformationen den aktiven Leiterinformationen entsprechen; wobei das genannte Bestimmen folgendes umfasst:
das Gruppieren (28) der aktiven Leiter in Gruppen aktiver Leiter, wobei jede Gruppe aktiver Leiter ein Paar aktiver Leiter aufweist, wobei das Gruppieren der aktiven Leiter in Gruppen folgendes aufweist:
das Auswählen eines ersten aktiven Leiters und eines zweiten aktiven Leiters, um ein mögliches Paar aktiver Leiter bereitzustellen;
das Bestimmen eines Kreuzkorrelationswertes, der dem möglichen Paar aktiver Leiter entspricht;
das Festlegen eines Schwellenwertes, wobei der Schwellenwert einem Bruchteil eines Autokorrelationswertes entspricht, der dem möglichenPaar aktiver Leiter entspricht; und
das Eliminieren des möglichenPaars aktiver Leiter, wenn der Kreuzkorrelationswert niedriger ist als der Schwellenwert; und
das Bereitstellen von Gruppeninformationen, wobei die Gruppeninformationen Informationen über die aktiven Leiter in jeder Gruppe aufweisen;
das Bereitstellen (25) eines ersten Indikationssignals, wobei es sich bei dem ersten Indikationssignal um einen ersten Typ handelt, wenn die Informationen über die aktiven Leiter für die Schnittstellenklasse den aktiven Leiterinformationen entsprechen, und wobei es sich bei dem ersten Indikationssignal um einen zweiten Typ handelt, wenn die Informationen über die aktiven Leiter für die Schnittstellenklasse nicht den aktiven Leiterinformationen entsprechen.

2. Verfahren nach Anspruch 1, wobei das Analysieren (13) der von den Leitern geführten Signale ferner das Bestimmen einer Referenzamplitudenspannung umfasst.

3. Verfahren nach Anspruch 2, wobei das Analysieren (13) der von den Leitern geführten Signale ferner das Bestimmen inaktiverLeiter umfasst, wobei es sich bei den inaktiven Leitern um die Leiter handelt, die den bestimmten Durchschnittsamplitudenspannungswerten entsprechen, die niedriger sind als die Referenzamplitudenspannung.

4. Verfahren nach Anspruch 1, wobei das Bestimmen des Durchschnittsamplitudenspannungswertes für einen der Leiter, der ein Signal mit einer Wechselspannung führt, folgendes aufweist:
das Messen der Spannungsamplitude des von dem einen der Leiter geführten Signals an einer Mehrzahl von diskreten Zeitpunkten während einem ersten Zeitraum, um eine erste Anordnung von Spannungsamplituden bereitzustellen;
das Messen der Spannungsamplitude des von dem einen der Leiter geführten Signals an einer Mehrzahl von diskreten Zeitpunkten während einem zweiten Zeitraum, um eine zweite Anordnung von Spannungsamplituden bereitzustellen;
das Auswählen der maximalen Spannungsamplitude aus jeder Anordnung; und
das Bestimmen des Durchschnitts der maximalen Spannungsamplitude, um den Durchschnittsspannungsamplitudenwert vorzusehen.

5. Verfahren nach Anspruch 1, wobei der Autokorrelationswert, der dem möglichenPaar aktiver Leiter entspricht, durch folgende Schritte bestimmt wird:
das Messen einer Spannungsamplitude des von dem ersten aktiven Leiter geführten Signals an einer Mehrzahl von diskreten Zeitpunkten während einem ersten Zeitraum, um eine erste Anordnung von Spannungsamplituden bereitzustellen;
das Quadrieren jeder gemessenen Amplitude in der ersten Anordnung und das Zusammenaddieren der quadrierten gemessenen Amplituden, um eine erste Summe von Quadratwertenbereitzustellen;
das Messen einer Spannungsamplitude des von dem einen der Leiter geführten Signals an einer Mehrzahl von diskreten Zeitpunkten während einem zweiten Zeitraum, um eine zweite Anordnung von Spannungsamplituden bereitzustellen;
das Quadrieren jeder gemessenen Amplitude in der zweiten Anordnung und das Zusammenaddieren der quadrierten gemessenen Amplituden, um eine zweite Summe von Quadratwertenbereitzustellen;
das Bestimmen eines ersten Autokorrelationswertes durch Addierender ersten Summe von Quadratwertenzu der zweiten Summe von Quadratwerten;
das Messen einer Spannungsamplitude des von dem zweiten aktiven Leiter geführten Signals an der Mehrzahl von diskreten Zeitpunkten während dem ersten Zeitraum, um eine dritte Anordnung von Spannungsamplituden bereitzustellen;
das Quadrieren jeder gemessenen Amplitude in der dritten Anordnung und das Zusammenaddieren der quadrierten gemessenen Amplituden, um ein dritte Summe von Quadratwertenbereitzustellen;
das Messen einer Spannungsamplitude des von dem zweiten aktiven Leiter geführten Signals an der Mehrzahl von diskreten Zeitpunkten während dem zweiten Zeitraum, um eine vierte Anordnung von Spannungsamplitudenwerten bereitzustellen;
das Quadrieren jeder gemessenen Amplitude in der vierten Anordnung und das Zusammenaddieren der quadrierten gemessenen Amplituden, um eine vierte Summe von Quadratwertenbereitzustellen;
das Bestimmen eines zweiten Autokorrelationswertes durch Addierender dritten Summe von Quadratwertenzu der vierten Summe von Quadratwerten;und
das Bestimmen des Autokorrelationswertes, der dem einen der möglichen Paare aktiver Leiter entspricht, durch Bestimmen des Durchschnitts des ersten Autokorrelationswertes und des zweiten Autokorrelationswertes.

6. Verfahren nach Anspruch 1, wobei der Autokorrelationswert, der dem möglichenPaar aktiver Leiter entspricht, die Periodizität der von dem möglichenPaar aktiver Leiter geführten Signale bestimmt.

7. Verfahren nach Anspruch 6, wobei der Autokorrelationswert, der dem möglichenPaar aktiver Leiter entspricht, bestimmt wird durch:
das Messen einer Spannungsamplitude des von dem ersten aktiven Leiter geführten Signals an einer Mehrzahl von diskreten Zeitpunkten während einem ersten Zeitraum, um eine erste Anordnung von Spannungsamplituden bereitzustellen;
das Quadrieren jeder gemessenen Amplitude in der ersten Anordnung und das Zusammenaddieren der quadrierten gemessenen Amplituden, um eine erste Summe von Quadratwertenbereitzustellen;
das Messen einer Spannungsamplitude des von dem ersten aktiven Leiter geführten Signals an einer Mehrzahl von diskreten Zeitpunkten während einem zweiten Zeitraum, um eine zweite Anordnung von Spannungsamplituden bereitzustellen;
das Quadrieren jeder gemessenen Amplitude in der zweiten Anordnung und das Zusammenaddieren der quadrierten gemessenen Amplituden, um eine zweite Summe von Quadratwertenbereitzustellen;
das Bestimmen eines ersten Autokorrelationswertes durch Addierender ersten Summe von Quadratwertenzu der zweiten Summe von Quadratwerten;
das Messen einer Spannungsamplitude des von dem zweiten aktiven Leiter geführten Signals an einer Mehrzahl von diskreten Zeitpunkten während einem dritten Zeitraum, der sich von dem ersten Zeitraum unterscheidet, um eine dritte Anordnung von Spannungsamplituden bereitzustellen;
das Quadrieren jeder gemessenen Amplitude in der dritten Anordnung und das Zusammenaddieren der quadrierten gemessenen Amplituden, um eine dritte Summe von Quadratwertenbereitzustellen;
das Messen einer Spannungsamplitude des von dem zweiten aktiven Leiter geführten Signals an einer Mehrzahl von diskreten Zeitpunkten während einem vierten Zeitraum, der sich von dem zweiten Zeitraum unterscheidet, um eine vierte Anordnung von Spannungsamplituden bereitzustellen;
das Quadrieren jeder gemessenen Amplitude in der vierten Anordnung und das Zusammenaddieren der quadrierten gemessenen Amplituden, um eine vierte Summe von Quadratwertenbereitzustellen;
das Bestimmen eines zweiten Autokorrelationswertes durch Addierender dritten Summe von Quadratwertenzu der vierten Summe von Quadratwerten;und
das Bestimmen des Autokorrelationswertes, der dem einen der möglichen Paare von aktiven Leitern entspricht, durch Bestimmen des Durchschnitts des ersten Autokorrelationswertes und des zweiten Autokorrelationswertes.

8. Verfahren nach Anspruch 1, wobei das Bestimmen des Kreuzkorrelationswertes folgendes aufweist:
das Messen einer Spannungsamplitude des von dem ersten aktiven Leiter geführten Signals an einer Mehrzahl von diskreten Zeitpunkten während einem ersten Zeitraum, um eine erste Anordnung von Spannungsamplituden bereitzustellen;
das Messen einer Spannungsamplitude des von dem ersten aktiven Leiter geführten Signals an einer Mehrzahl von diskreten Zeitpunkten während einem zweiten Zeitraum, um eine zweite Anordnung von Spannungsamplituden bereitzustellen;
das Messen einer Spannungsamplitude des von dem zweiten aktiven Leiter geführten Signals an einer Mehrzahl von diskreten Zeitpunkten während dem ersten Zeitraum, um eine dritte Anordnung von Spannungswerten bereitzustellen;
das Messen einer Spannungsamplitude des von dem zweiten aktiven Leiter geführten Signals an einer Mehrzahl von diskreten Zeitpunkten während dem zweiten Zeitraum, um eine vierte Anordnung von Spannungswerten bereitzustellen; und
das Multiplizieren der Spannungswerte in der ersten Anordnung mit den entsprechenden Spannungswerten in der dritten Anordnung, und das Multiplizieren der Spannungswerte in der zweiten Anordnung mit den entsprechenden Spannungswerten in der vierten Anordnung, und das Zusammenaddieren der Produkte, um den Kreuzkorrelationswert bereitzustellen.

9. Verfahren nach Anspruch 1, wobei das Bestimmen des Kreuzkorrelationswertes die Periodizität der von dem möglichenPaar aktiver Leiter geführten Signale bestimmt.

10. Verfahren nach Anspruch 9, wobei das Bestimmen des Kreuzkorrelationswertes folgendes aufweist:
das Messen einer Spannungsamplitude des von dem ersten aktiven Leiter geführten Signals an einer Mehrzahl von diskreten Zeitpunkten während einem ersten Zeitraum, um eine erste Anordnung von Spannungsamplituden bereitzustellen;
das Messen einer Spannungsamplitude des von dem ersten aktiven Leiter geführten Signals an einer Mehrzahl von diskreten Zeitpunkten während einem zweiten Zeitraum, um eine zweite Anordnung von Spannungsamplituden bereitzustellen;
das Messen einer Spannungsamplitude des von dem zweiten aktiven Leiter geführten Signals an einer Mehrzahl von diskreten Zeitpunkten während einem dritten Zeitraum, der sich von dem ersten Zeitraum unterscheidet, um eine dritte Anordnung von Spannungswerten bereitzustellen;
das Messen einer Spannungsamplitude des von dem zweiten aktiven Leiter geführten Signals an einer Mehrzahl von diskreten Zeitpunkten während einem vierten Zeitraum, der sich von dem zweiten Zeitraum unterscheidet, um eine vierte Anordnung von Spannungswerten bereitzustellen;
das Multiplizieren der Spannungswerte in der ersten Anordnung mit den entsprechenden Spannungswerten in der dritten Anordnung, und das Multiplizieren der Spannungswerte in der zweiten Anordnung mit den entsprechenden Spannungswerten in der vierten Anordnung, und das Zusammenaddieren der Produkte, um den Kreuzkorrelationswert bereitzustellen.

11. Computerprogrammprodukt, das eine Computerprogrammcodeeinrichtung umfasst, die in der Lage ist, alle Schritte jedes der Ansprüche 1 bis 10 auszuführen, wenn die Programmcodeeinrichtung auf einem Computer ausgeführt wird.

12. Computerprogrammprodukt nach Anspruch 11, ausgeführt auf einem computerlesbaren Medium.

13. Entdeckungsvorrichtung (100), die folgendes umfasst:
eine Schaltschnittstellenvorrichtung mit einem ersten Verbinder(103), der eine erste Anordnung von Leitern aufweist, eine Leiterauswahlvorrichtung (106) und einen zweiten Verbinder(109), wobei der erste Verbindereine Verbindung zu einem Kommunikationspfad (112) herstellen kann und Signale von dem Kommunikationspfad über die Leiter führen kann, und wobei die Leiterauswahlvorrichtung mit dem ersten Verbinderund mit dem zweiten Verbinderverbunden ist; und
einen Computer (115), der mit dem zweiten Verbinder (109) verbundenist und eine darauflaufende Software aufweist, dadurchgekennzeichnet, dass die Software so angeordnet ist, dass sie den Computer anweist, zu bestimmen (13), welche der Leiter aktiv oder inaktiv sind, wobei es sich bei den aktiven Leitern um die Leiter handelt, welche die Signale führen, wobei die inaktivenLeiter dadurchbestimmt werden, dass eine Durchschnittsamplitudenspannung für jeden der Leiter ermittelt wird, der ein Signal mit einer Wechselspannung führt, und wobei die Durchschnittsamplitudenspannung mit einer Referenzamplitudenspannung verglichen wird;
wobei die Software ferner so angeordnet ist, dass sie den Computer anweist, eine Liste der aktiven Leiter mit einer Schnittstellenklassenliste zu vergleichen (22), wobei die Schnittstellenklassenliste die Leiter identifiziert, die bei der Signalübermittlung gemäß der Schnittstellenklasse eingesetzt werden, und wenn die Liste der aktiven Leiter mit der Schnittstellenklassenliste übereinstimmt, wird der Computer angewiesen, ein Signal zu übermitteln (25), das die Schnittstellenklasse identifiziert;
dadurchgekennzeichnet, dass das genannte Vergleichen folgendes umfasst:
das Gruppieren (28) der aktiven Leiter in Gruppen aktiver Leiter, wobei jede Gruppe aktiver Leiter ein Paar aktiver Leiter aufweist, wobei das Gruppieren der aktiven Leiter in Gruppen folgendes aufweist:
das Auswählen eines ersten aktiven Leiters und eines zweiten aktiven Leiters, um ein mögliches Paar aktiver Leiter bereitzustellen;
das Bestimmen eines Kreuzkorrelationswertes, der dem möglichen Paar aktiver Leiter entspricht;
das Festlegen eines Schwellenwertes, wobei der Schwellenwert einem Bruchteil eines Autokorrelationswertes entspricht, der dem möglichenPaar aktiver Leiter entspricht; und
das Eliminieren des möglichenPaars aktiver Leiter, wenn der Kreuzkorrelationswert niedriger ist als der Schwellenwert; und
das Bereitstellen von Gruppeninformationen, wobei die Gruppeninformationen Informationen über die aktiven Leiter in jeder Gruppe aufweisen;

## Revendications

1. Procédé de fourniture d'un signal d'indication, comprenant les étapes consistant à :
fournir (10) une voie de communication portant des signaux ;
connecter (10) la voie de communication à un dispositif d'interface, le dispositif d'interface ayant des conducteurs pour porter les signaux ;
analyser (13) les signaux portés par les conducteurs pour déterminer lesquels des conducteurs sont des conducteurs actifs comprenant les étapes consistant à déterminer lesquels des conducteurs portent un signal ayant une tension alternative ; et à déterminer une tension d'amplitude moyenne pour chacun des conducteurs portant un signal ayant une tension alternative ;
fournir (16) des informations de conducteur actif, dans lequel les informations de conducteur actif comprennent une liste des conducteurs actifs ;
fournir (19) des informations de classe d'interfaces primaire, dans lequel les informationsde classe d'interfaces primaire comprennent des informations sur les conducteurs actifs pour une classe d'interfaces connue ;
déterminer (22) si les informationsde classe d'interfaces primaire correspondent aux informationsde conducteur actif ; dans lequel ladite détermination comprend les étapes consistant à :
regrouper (28) les conducteurs actifs en groupes de conducteurs actifs, chaque groupe de conducteurs actifs ayant une paire de conducteurs actifs, dans lequel le regroupement des conducteurs actifs en groupes comprend les étapes consistant à :
sélectionner un premier conducteur actif et un second conducteur actif pour fournir une paire possible de conducteurs actifs ;
déterminer une valeur de corrélation croisée correspondant à la paire possible de conducteurs actifs ;
fixer une valeur seuil, dans lequel la valeur seuil est égale à une fraction d'une valeur d'autocorrélation correspondant à la paire possible de conducteurs actifs ; et
éliminer la paire possible de conducteurs actifs si la valeur de corrélation croisée est inférieure à la valeur seuil ; et
fournir des informations de groupe, dans lequel les informationsde groupe comprennent des informations sur les conducteurs actifs dans chaque groupe ; et
fournir (25) un premier signal d'indication, le premier signal d'indication étant d'un premier type si les informationssur les conducteurs actifs pour la classe d'interfaces correspondent aux informations de conducteur actif, et le premier signal d'indication étant d'un second type si les informationssur les conducteurs actifs pour la classe d'interfaces ne correspondent pas aux informationsde conducteur actif.

2. Procédé selon la revendication 1, dans lequel l'analyse (13) des signaux portés par les conducteurs comprend en outre l'étape consistant à déterminer une tension d'amplitude de référence.

3. Procédé selon la revendication2, dans lequel l'analyse (13) des signaux portés par les conducteurs comprend en outre l'étape consistant à déterminer les conducteurs inactifs, dans lequel les conducteurs inactifs sont les conducteurs correspondant aux valeurs de tension d'amplitude moyenne déterminées qui sont inférieures à la tension d'amplitude de référence.

4. Procédé selon la revendication 1, dans lequel la détermination de la valeur de tension d'amplitude moyenne pour l'un des conducteurs portant un signal ayant une tension alternative comprend les étapes consistant à :
mesurer l'amplitude de tension du signal porté par l'un des conducteurs à une pluralité de temps discrets pendant une première période de temps pour fournir une première matrice d'amplitudes de tension ;
mesurer l'amplitude de tension du signal porté par l'un des conducteurs actifs à une pluralité de temps discrets pendant une deuxième période de temps pour fournir une deuxième matrice de valeurs d'amplitude de tension ;
sélectionner l'amplitude de tension maximale à partir de chaque matrice ; et
déterminer la moyenne de l'amplitude de tension maximale pour fournir la valeur d'amplitude de tension moyenne.

5. Procédé selon la revendication 1, dans lequel la valeur d'autocorrélation correspondant à la paire possible de conducteurs actifs est déterminée par les étapes consistant à :
mesurer une amplitude de tension du signal porté par le premier conducteur actif à une pluralité de temps discrets pendant une première période de temps pour fournir une première matrice d'amplitudes de tension ;
élever au carré chaque amplitude mesurée dans la première matrice et ajouter les amplitudes mesurées élevées au carré ensemble pour fournir une première somme de la valeur des carrés ;
mesurer une amplitude de tension du signal porté par le premier conducteur actif à une pluralité de temps discrets pendant une deuxième période de temps pour fournir une deuxième matrice d'amplitudes de tension ;
élever au carré chaque amplitude mesurée dans la deuxième matrice et ajouter les amplitudes mesurées élevées au carré ensemble pour fournir une deuxième somme de la valeur des carrés ;
déterminer une première valeur d'autocorrélation en ajoutant la première somme de la valeur des carrés à la deuxième somme de la valeur des carrés ;
mesurer une amplitude de tension du signal porté par le second conducteur actif à la pluralité de temps discrets pendant la première période de temps pour fournir une troisième matrice d'amplitudes de tension ;
élever au carré chaque amplitude mesurée dans la troisième matrice et ajouter les amplitudes mesurées élevées au carré ensemble pour fournir une troisième somme de la valeur des carrés ;
mesurer une amplitude de tension du signal porté par le second conducteur actif à la pluralité de temps discrets pendant la deuxième période de temps pour fournir une quatrième matrice d'amplitudes de tension ;
élever au carré chaque amplitude mesurée dans la quatrième matrice et ajouter les amplitudes mesurées élevées au carré ensemble pour fournir une quatrième somme de la valeur des carrés ;
déterminer une seconde valeur d'autocorrélation en ajoutant la troisième somme de la valeur des carrés à la quatrième somme de la valeur des carrés ; et
déterminer la valeur d'autocorrélation correspondant à l'une des paires possibles de conducteurs actifs en déterminant la moyenne de la première valeur d'autocorrélation et de la seconde valeur d'autocorrélation.

6. Procédé selon la revendication 1, dans lequel la valeur d'autocorrélation correspondant à la paire possible de conducteurs actifs tient compte de la périodicité des signaux portés par la paire possible de conducteurs actifs.

7. Procédé selon la revendication 6, dans lequel la valeur d'autocorrélation correspondant à la paire possible de conducteurs actifs est déterminée par les étapes consistant à :
mesurer une amplitude de tension du signal porté par le premier conducteur actif à une pluralité de temps discrets pendant une première période de temps pour fournir une première matrice d'amplitudes de tension ;
élever au carré chaque amplitude mesurée dans la première matrice et ajouter les amplitudes mesurées élevées au carré ensemble pour fournir une première somme de la valeur des carrés ;
mesurer une amplitude de tension du signal porté par le premier conducteur actif à une pluralité de temps discrets pendant une deuxième période de temps pour fournir une deuxième matrice d'amplitudes de tension ;
élever au carré chaque amplitude mesurée dans la deuxième matrice et ajouter les amplitudes mesurées élevées au carré ensemble pour fournir une deuxième somme de la valeur des carrés ;
déterminer une première valeur d'autocorrélation en ajoutant la première somme de la valeur des carrés à la deuxième somme de la valeur des carrés ;
mesurer une amplitude de tension du signal porté par le second conducteur actif à une pluralité de temps discrets pendant une troisième période de temps, différente de la première période de temps, pour fournir une troisième matrice d'amplitudes de tension ;
élever au carré chaque amplitude mesurée dans la troisième matrice et ajouter les amplitudes mesurées élevées au carré ensemble pour fournir une troisième somme de la valeur des carrés ;
mesurer une amplitude de tension du signal porté par le second conducteur actif à une pluralité de temps discrets pendant une quatrième période de temps, différente de la deuxième période de temps, pour fournir une quatrième matrice d'amplitudes de tension ;
élever au carré chaque amplitude mesurée dans la quatrième matrice et ajouter les amplitudes mesurées élevées au carré ensemble pour fournir une quatrième somme de la valeur des carrés ;
déterminer une seconde valeur d'autocorrélation en ajoutant la troisième somme de la valeur des carrés à la quatrième somme de la valeur des carrés ; et
déterminer la valeur d'autocorrélation correspondant à l'une des paires possibles de conducteurs actifs en déterminant la moyenne de la première valeur d'autocorrélation et de la seconde valeur d'autocorrélation.

8. Procédé selon la revendication 1, dans lequel la détermination de la valeur de corrélation croisée comprend les étapes consistant à :
mesurer une amplitude de tension du signal porté par le premier conducteur actif à une pluralité de temps discrets pendant une première période de temps pour fournir une première matrice d'amplitudes de tension ;
mesurer une amplitude de tension du signal porté par le premier conducteur actif à une pluralité de temps discrets pendant une deuxième période de temps pour fournir une deuxième matrice d'amplitudes de tension ;
mesurer une amplitude de tension du signal porté par le second conducteur actif à la pluralité de temps discrets pendant la première période de temps pour fournir une troisième matrice de valeurs de tension ;
mesurer une amplitude de tension du signal porté par le second conducteur actif à la pluralité de temps discrets pendant la deuxième période de temps pour fournir une quatrième matrice de valeurs de tension ; et
multiplier les valeurs de tension dans la première matrice avec des valeurs de tension correspondantes dans la troisième matrice, et multiplier les valeurs de tension dans la deuxième matrice avec des valeurs de tension correspondantes dans la quatrième matrice, et ajouter les produits ensemble pour fournir la valeur de corrélation croisée.

9. Procédé selon la revendication 1, dans lequel la détermination de la valeur de corrélation croisée tient compte de la périodicité dans les signaux portés par la paire possible de conducteurs actifs.

10. Procédé selon la revendication 9, dans lequel la détermination de la valeur de corrélation croisée comprend les étapes consistant à :
mesurer une amplitude de tension du signal porté par le premier conducteur actif à une pluralité de temps discrets pendant une première période de temps pour fournir une première matrice d'amplitudes de tension ;
mesurer une amplitude de tension du signal porté par le premier conducteur actif à une pluralité de temps discrets pendant une deuxième période de temps pour fournir une deuxième matrice d'amplitudes de tension ;
mesurer une amplitude de tension du signal porté par le second conducteur actif à une pluralité de temps discrets pendant une troisième période de temps, différente de la première période de temps, pour fournir une troisième matrice de valeurs de tension ;
mesurer une amplitude de tension du signal porté par le second conducteur actif à une pluralité de temps discrets pendant une quatrième période de temps, différente de la deuxième période de temps, pour fournir une quatrième matrice de valeurs de tension ; et
multiplier les valeurs de tension dans la première matrice avec des valeurs de tension correspondantes dans la troisième matrice, et multiplier des valeurs de tension dans la deuxième matrice avec des valeurs de tension correspondantes dans la quatrième matrice,
et ajouter les produits ensemble pour fournir la valeur de corrélation croisée.

11. Produit de programme informatiquecomprenant des moyens de code de programme informatiqueadaptés pour réaliser toutes les étapes de l'une quelconque des revendications 1 à 10 lorsque ces moyens de code de programme sont exécutés sur un ordinateur.

12. Produit de programme informatiqueselon la revendication 11 lorsqu'il est réalisé sur un support lisible par ordinateur.

13. Dispositif de découverte (100), comprenant :
un dispositif d'interface de commutateur ayant un premier connecteur (103) comprenant un premier ensemble de conducteurs, un dispositif de sélection de conducteur (106) et un second connecteur (109), le premier connecteur étant capable de se connecter à une voie de communication (112) et de porter des signaux depuis la voie de communication par l'intermédiaire des conducteurs, et le dispositif de sélection de conducteur étant connecté au premier connecteur et au second connecteur ; et
un ordinateur (115) connecté au second connecteur (109) et sur lequel est exécuté un logiciel, **caractérisé en ce que** le logiciel est agencé pour ordonner à l'ordinateur de déterminer (13) lesquels des conducteurs sont actifs ou inactifs, les conducteurs actifs étant ceux qui portent les signaux, les conducteurs inactifs étant déterminés en trouvant une tension d'amplitude moyenne pour chacun des conducteurs portant un signal ayant une tension alternative et en comparant la tension d'amplitude moyenne à une tension d'amplitude de référence ;
dans lequel le logiciel est en outre agencé pour ordonner à l'ordinateur de comparer (22) une liste des conducteurs actifs à une liste de classe d'interfaces, la liste de classe d'interfaces identifiant les conducteurs utilisés pour transmettre des signaux selon la classe d'interfaces, et si la liste des conducteurs actifs est similaire à la liste de classe d'interfaces, ordonner à l'ordinateur d'envoyer (25) un signal identifiant la classe d'interfaces ;
**caractérisé en ce que** ladite comparaison comprenant les étapes consistant à :
regrouper (28) les conducteurs actifs en groupes de conducteurs actifs, chaque groupe de conducteurs actifs ayant une paire de conducteurs actifs, dans lequel le regroupement des conducteurs actifs en groupes comprend les étapes consistant à :
sélectionner un premier conducteur actif et un second conducteur actif pour fournir une paire possible de conducteurs actifs ;
déterminer une valeur de corrélation croisée correspondant à la paire possible de conducteurs actifs ;
fixer une valeur seuil, dans lequel la valeur seuil est égale à une fraction d'une valeur d'autocorrélation correspondant à la paire possible de conducteurs actifs ; et
éliminer la paire possible de conducteurs actifs si la valeur de corrélation croisée est inférieure à la valeur seuil ; et
fournir des informations de groupe, dans lequel les informationsde groupe comprennent des informations sur les conducteurs actifs dans chaque groupe.
